# EUROPEAN PATENT SPECIFICATION

(11) **EP 3 093 112 B1**
(45) Date of publication and mention of the grant of the patent: **18.12.2019**
(21) Application number: 16164537.9
(22) Date of filing: 08.04.2016
(51) Int. Cl.: B27M 1/08, B27G 21/00, B23Q 11/08, B23D 45/02, B23D 59/00, B28D 1/04, B28D 7/02

(54) **MACHINE TO PROCESS COMPONENTS OF WOOD OR THE LIKE**
MASCHINE ZUR VERARBEITUNG VON KOMPONENTEN AUS HOLZ ODER DERGLEICHEN
MACHINE POUR COMPOSANTS DE TRAITEMENT DE BOIS OU ANALOGUE

(30) Priority: 09.04.2015 IT BO20150170
(43) Date of publication of application: 16.11.2016
(73) Proprietor: BIESSE S.p.A., 61100 Pesaro (IT)
(72) Inventor: ANDREATINI, Davide, 61121 PESARO (IT)
(74) Representative: Manconi, Stefano

(56) References cited:
- EP-A1- 1 815 954
- EP-A1- 2 063 165
- EP-A2- 0 267 156
- DE-A1-102006 020 679
- DE-A1-102008 029 774
- DE-A1-102015 009 879

## Description

The present invention relates to a machine to process components of wood or the like, according to the preamble of claim 1. Such a machine is known from the document DE102006020679A1.

In the wood components processing field, it is known to provide a machine of the type comprising an elongated base provided with two guide side-members parallel to a substantially horizontal first direction; a plurality of crosspieces, which are mounted between the guide side-members parallel to a second direction substantially horizontal and transverse to the first direction; and at least one locking device mounted on each crosspiece to lock at least one component on a substantially horizontal support surface.

The machine comprises, furthermore, an overhead crane, which is mobile along the base in the first direction, and has a horizontal crosspiece, which extends above the base in the second direction, and supports an operating head, mobile in a third direction perpendicular to the support surface and provided with at least one tool to process the components.

Generally, the overhead crane comprises, furthermore, a protection guard, which extends around the crossbar, is substantially U-shaped, and is delimited in the first direction by two lateral sides, parallel one to the other and arranged on opposite sides of the operating head in the first direction.

Each lateral side extends at a given distance from the base and from the support surface to define a passageway section for the components under the lateral side.

Each lateral side is associated with a protection device configured to close the passageway section and prevent the machining shavings and/or scrap and tool fragments generated between the two lateral sides from escaping from the protection guard thus compromising the safety of the personnel.

The protection device comprises a plurality of flexible strips, which are arranged one next to the other in the second direction, and are mobile, relative to the respective lateral side, in the third direction between a lowered operating position, in which the flexible strips close the passageway section, and a raised rest position, in which the flexible strips are arranged substantially outside of the passageway section.

The passageway sections of the components under the lateral sides are sized to allow the machine to process components having a height, measured in the third direction, ranging from a minimum height and a maximum height.

Since the flexible strips are, by their nature, incapable of guaranteeing a high security level, the known machines to process wood components or the like described above have some drawbacks mainly deriving from the fact that the passageway sections are entirely closed, always and in any case, by the flexible strips and, therefore, also in the case of processing components having a height smaller than the maximum height.

The object of the present invention is to provide a machine to process components of wood or the like which is free from the drawbacks outlined above and which is simple and inexpensive to implement.

According to the present invention, there is provided a machine to process components of wood or the like as claimed in the appended claims.

The present invention will now be described with reference to the accompanying drawings, which illustrate a non-limiting embodiment, wherein:
Figure 1 is a schematic perspective view, with parts removed for clarity, of a preferred embodiment of the machine of the present invention; and
Figures 2 and 3 show two schematic side views, with parts removed for clarity, of a detail of the machine of Figure 1 illustrated in two different operating positions.

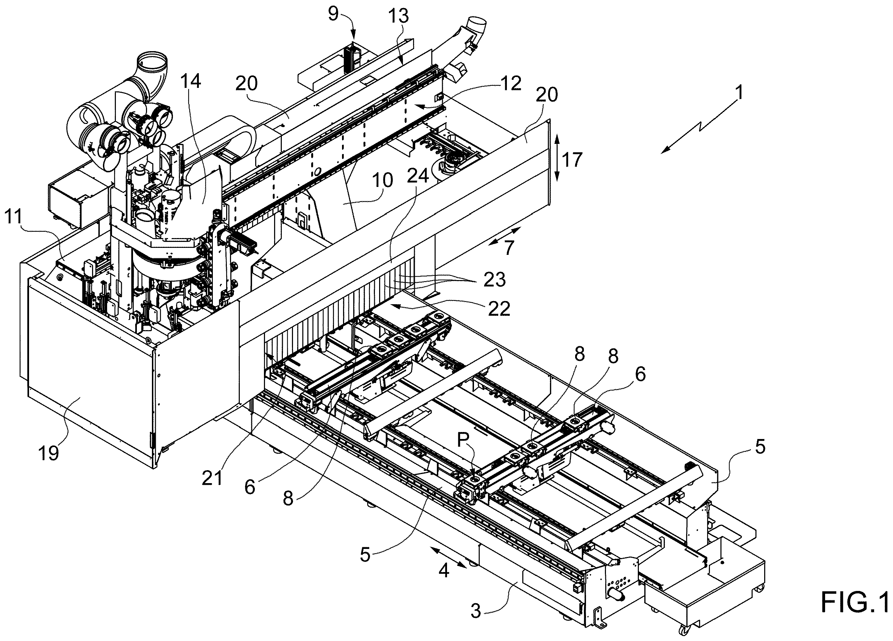

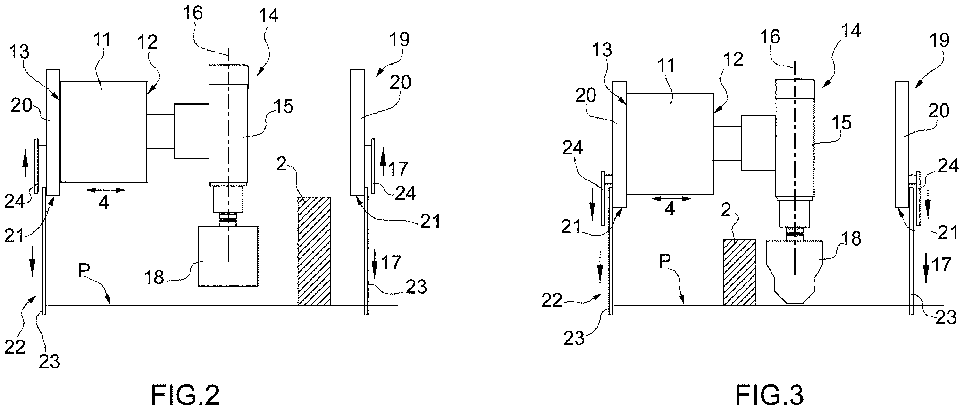

With reference to Figure 1, 1 denotes, as a whole, a machine to process wood components 2 or the like (Figures 2 and 3) such as, for example, panels or elements of window frames.

The machine 1 comprises an elongated base 3, which extends in a horizontal direction 4, is substantially U-shaped, and has two guide side-members 5 parallel to the direction 4.

The base 3 supports a plurality of crosspieces 6, which will be hereinafter indicated with the term "working surfaces", which extend between the side-members 5 in a horizontal direction 7 transverse to the direction 4, and are coupled in sliding manner to the side-members 5 to be moved, manually or by means of respective actuating devices known and not illustrated, along the side-members 5 in the direction 4.

The working surfaces 6 support a plurality of support blocks 8, whose arrangement on the respective working surfaces 6 depends substantially on the size of the components (not illustrated) to be processed and on the processes to be performed on the components (not illustrated).

Each block 8 is mobile along the respective working surface 6 in direction 7, is coplanar to the other blocks 8 to define a support surface P for at least one component 2, and is connected, in this case, with a pneumatic suction device, known and not illustrated, adapted to lock the component 2 on the surface P.

The blocks 8 are used when the components 2 to be processed are panels, and are replaced with locking clamps when the components 2 to be processed are window frame components.

The base 3 supports, furthermore, an overhead crane 9 comprising a vertical upright 10, which is coupled to the base 3 in known manner to perform, along the base 3 and under the thrust of an actuating device known and not illustrated, rectilinear movements in the direction 4, and bears, connected at the free end thereof, a horizontal crosspiece 11.

The crosspiece 11 extends above the base 3 in the direction 7, and is limited in the direction 4 by two opposite faces 12, 13 substantially parallel one to the other and perpendicular to the direction 4.

As illustrated in Figures 1, 2, and 3, the overhead crane 9 supports an operating head 14 coupled, in known manner, to the face 12 of the crosspiece 11 to perform rectilinear movements along the crosspiece 11 in the direction 7.

The head 14 is provided with an electrospindle 15, which has a longitudinal axis 16 parallel to a vertical direction 17 orthogonal to the directions 4 and 7, is coupled in known manner to the head 14 to perform, with respect to the head 14, rectilinear movements in the direction 17, and bears a tool 18 fitted to process the components 2.

The overhead crane 9 is provided, furthermore, with a protection guard 19, which extends in a horizontal containment surface parallel to the surface P, it is substantially U-shaped, and extends around the crossbar 6 and the operating head 14.

The guard 19 is fixed to the face 13 of the crosspiece 11, and has two flat lateral sides 20, which are substantially parallel to each other and perpendicular to the direction 4, and are configured to delimit the overhead crane 9 in the direction 4.

Each lateral side 20 is configured so as to extend at a given distance from the base 3 and from the surface P and defining, therefore, a passageway section 21 for the components 2 under the side 20.

Each side 20 is, furthermore, associated with a protection device 22 configured to close the respective section 21 and prevent the machining shavings and/or scrap and tool fragments generated between the two sides 20 of the guard 19 from escaping from the protection guard 19 thus compromising the safety of the personnel.

The device 22 comprises a plurality of flexible strips 23, which are arranged one next to the other in the direction 7, which extend in the direction 17, and project from the respective side 20 towards the surface P.

According to the invention, each strip 23 has a height, measured parallel to the direction 17, that is at least equal to the height of the passageway section 21, also measured parallel to the direction 17.

The strips 23 are attached to a support plate (not illustrated) coupled in a sliding manner to the guard 19 to move the strips 23, relative to the respective side 20, in the direction 17 between a lowered operating position (Figures 2 and 3), in which the strips 23 close the section 21, and a raised rest position (not illustrated), in which the strips 23 are arranged substantially on the outside of the section 21.

The device 22 comprises, furthermore, a rigid shutter 24, which is made of metal material, extends in the direction 7 above the base 3, and has a length, measured parallel to the direction 7, substantially equal to the length of the strips 23 measured parallel to the direction 7, as well.

According to the invention, the strips 23 of the two devices 22 are arranged between the two shutters 24.

The shutter 24 is mobile, with respect to the respective side 20, in the direction 17 between a raised rest position (Figure 2), in which the shutter 24 is arranged substantially on the outside of the respective section 21, and a lowered operating position (Figure 3), in which the shutter 24 projects from the respective side 20 towards the surface P, and is superimposed on the strips 23 to close part of the respective section 21.

The shutter 24 is moved to its rest raised position when the head 14 performs the processing of components 2 having a height, measured parallel to direction 17, approximately rounded down to the distance of the side 20 from the surface P, and is moved into its lowered operating position when the head 14 performs the processing of components 2 having a relatively reduced height.

In other words, when the component 2 has a relatively reduced height, the shutter 24 is lowered so as to partially close the section 21, reducing the portion of the section 21 closed only by the strips 23, and improve the safety of the personnel.

## Claims

1. A machine to process components (2) of wood or the like comprising a base (3) extending in a first direction (4); a locking unit (8), which is mounted on the base (3) to lock at least one component (2) on a support surface (P); an overhead crane (9), which extends above the base (3) in a second direction (7) that is transverse to the first direction (4), is delimited, in the first direction (4), by two lateral sides (20), and is provided with an operating head (14), which is mounted between the lateral sides (20) to process the components (2); each lateral side (20) at least partially extending at a given distance from the support surface (P) to define a passageway section (21) for the component (2) under the lateral side (20); and, for each lateral side (20), a respective protection device (22), which is configured to at least partially close the relative passageway section (21), and comprises at least one flexible strip (23), which projects from the lateral side (20) towards the support surface (P); and, wherein each protection device (22) comprises, furthermore, a shutter (24), which is mobile, relative to the respective lateral side (20), in a third direction (17), which is substantially orthogonal to the support surface (P), between a raised rest position, in which the shutter (24) substantially remains on the outside of the relative passageway section (21), and a lowered operating position, in which the shutter (24) projects from the relative lateral side (20) towards the support surface (P) to close part of the passageway section (21); each flexible strip (23) being mobile, relative to the respective lateral side (20), between a lowered operating position, in which the flexible strip (23) extends on the inside of the passageway section (21), and a raised rest position, in which the flexible strip (23) extends on the outside of the passageway section (21); each flexible strip (23) having a height, measured parallel to the third direction (17), that is at least equal to the height of the passageway section (21), which is measured parallel to the third direction (17), as well; **characterized by** the flexible strips (23) of the two protection devices (22) being mounted between the two shutters (24) in the first direction (4); and each shutter (24) having a height, measured parallel to the third direction (17), that is smaller than the height of the passageway section (21), which is measured parallel to the third direction (17), as well.

2. A machine according to claim 1, wherein the shutter (24) is a rigid shutter.

3. A machine according to claim 1 or 2, wherein each protection device (22) comprises a plurality of flexible strips (23), which are arranged one next to the other along the relative lateral side (20) in the second direction (7).

4. A machine according to any of the previous claims, wherein the shutter (24) and the flexible strips (23) of each protection device (22) overlap one another, when they are in the relative lowered operating positions.

5. A machine according to any of the previous claims, wherein the overhead crane (9) comprises a horizontal crosspiece (11), which extends in the second direction (7), and supports the operating head (14); and a protection guard (19), which is substantially U-shaped, extends around the horizontal crosspiece (11), and is configured so as to define the two lateral sides (20) of the overhead crane (9) .

6. A machine according to any of the previous claims, wherein the locking unit (8) and the overhead crane (9) are mobile, relative to one another, in the first direction (4), so as to allow the operating head (14) to process the components (2) .

## Patentansprüche

1. Maschine zum Verarbeiten von Komponenten aus Holz oder dergleichen, umfassend eine Basis (3), die sich in einer ersten Richtung (4) erstreckt; eine Verriegelungseinheit (8), die auf der Basis (3) montiert ist, um wenigstens eine Komponente (2) auf einer Tragfläche (P) zu verriegeln; einen Überkopfkran (9), der sich oberhalb der Basis (3) in einer zweiten Richtung (7) erstreckt, quer zur ersten Richtung (4), in der ersten Richtung (4) begrenzt ist durch zwei seitliche Schlitten (20) und mit einem Bearbeitungskopf (14) versehen ist, der zwischen den Seitenflächen (20) angeordnet ist, um die Komponenten (2) zu verarbeiten; jede Seite (20) erstreckt sich wenigstens teilweise um einen gegebenen Abstand von der Tragfläche (P), um einen Passagenabschnitt (21) für die Komponente (2) unter der Seite (20) zu schaffen; ferner für jede Seite (20) eine entsprechende Schutzeinrichtung (22), die derart gestaltet ist, dass sie wenigstens teilweise den betreffenden Passagenabschnitt (21) absperrt und wenigstens einen flexiblen Streifen (23) umfasst, der sich von der Seite (20) zur Tragfläche (P) erstreckt; jede Schutzeinrichtung (22) umfasst weiterhin einen Verschluss, der relativ zur entsprechenden Seite (20) in einer dritten Richtung (17) bewegbar ist, im Wesentlichen senkrecht zur Tragfläche (P), zwischen einer angehobenen Ruheposition, in welcher der Verschluss (24) im Wesentlichen außerhalb des betreffenden Passagenabschnittes (21) verbleibt, und eine abgesenkten Arbeitsposition, in welcher der Verschluss von der betreffenden Seite (20) zur Tragfläche (P) hervorragt, um einen Teil des Passagenabschnittes (21) abzusperren; jeder flexible Streifen (23) ist relativ zur betreffenden Seite (20) beweglich zwischen einer abgesenkten Arbeitsposition, in welcher sich der flexible Streifen (23) auf der Innenseite des Passagenabschnittes (21) erstreckt, und einer angehobenen Ruheposition, in welcher sich der flexible Streifen (23) auf der Außenseite des Passagenabschnittes (21) erstreckt; jeder flexible Streifen (23) weist eine Höhe auf, gemessen parallel zur dritten Richtung (17), die wenigstens gleich der Höhe des Passagenabschnittes (21) ist, gemessen parallel zur dritten Richtung (17),
**dadurch gekennzeichnet, dass** der flexible Streifen (23) der beiden Schutzeinrichtungen (22) zwischen den beiden Verschlüssen (24) in der ersten Richtung angeordnet ist, das jeder Verschluss (24) eine Höhe aufweist, gemessen parallel zur dritten Richtung (17), die kleiner als die Höhe des Passagenabschnittes (21) ist, gemessen parallel zur dritten Richtung (17).

2. Maschine nach Anspruch 1, **dadurch gekennzeichnet, dass** der Verschluss (21) ein starrer Verschluss ist.

3. Maschine nach Anspruch 1 oder 2, **dadurch gekennzeichnet, dass** das jede Schutzeinrichtung (22) eine Mehrzahl flexibler Streifen (23) umfasst, die entlang der betreffenden Seite (20) in der zweiten Richtung (7) aufeinanderfolgend angeordnet sind.

4. Maschine nach einem der vorausgegangenen Ansprüche, **dadurch gekennzeichnet, dass** der Verschluss (24) und die flexiblen Streifen (23) einer jeden Schutzeinrichtung (22) einander überlappen, wenn sie sich in der betreffenden abgesenkten Arbeitsposition befinden.

5. Maschine nach einem der vorausgegangenen Ansprüche, wobei der Überkopfkran (9) ein horizontales Querteil (11) umfasst, das sich in der zweiten Richtung (7) erstreckt und den Arbeitskopf (14) trägt; ferner ein Schutzwächter (19), der im Wesentlichen U-förmig ist, sich horizontal um das Querstück (11) herum erstreckt und derart gestaltet ist, dass es die beiden Seiten (20) des Überkopfkranes (9) bildet.

6. Maschine nach einem der vorausgegangenen Ansprüche, **dadurch gekennzeichnet, dass** die Verriegelungseinheit (8) und der Überkopfkran (9) in der ersten Richtung (4) relativ zueinander beweglich sind, sodass der Arbeitskopf (14) die Komponenten (2) bearbeiten kann.

## Revendications

1. Machine pour traiter des composants (2) en bois ou similaire comprenant une base (3) s'étendant dans une première direction (4) ; une unité de blocage (8), qui est montée sur la base (3) pour bloquer au moins un composant (2) sur une surface de support (P); un pont roulant (9), qui s'étend au-dessus de la base (3) dans une deuxième direction (7) qui est transversale à la première direction (4), est délimité, dans la première direction (4), par deux côtés latéraux (20), et est pourvu d'une tête de fonctionnement (14), qui est montée entre les côtés latéraux (20) pour traiter les composants (2); chaque côté latéral (20) s'étendant au moins partiellement à une distance donnée de la surface de support (P) pour définir une section de passage (21) pour le composant (2) sous le côté latéral (20) ; et, pour chaque côté latéral (20), un dispositif de protection (22) respectif, qui est configuré pour fermer au moins partiellement la section de passage relative (21), et comprend au moins une bande flexible (23), qui fait saillie du côté latéral (20) vers la surface de support (P) ; et dans laquelle chaque dispositif de protection (22) comprend, en outre, un volet (24), qui est mobile par rapport au côté latéral (20) respectif, dans une troisième direction (17), qui est sensiblement orthogonale à la surface de support (P), entre une position de repos relevée, dans laquelle le volet (24) reste sensiblement sur l'extérieur de la section de passage relative (21), et une position de fonctionnement abaissée, dans laquelle le volet (24) fait saillie du côté latéral relatif (20) vers la surface de support (P) pour fermer une partie de la section de passage (21); chaque bande flexible (23) étant mobile, par rapport au côté latéral (20) respectif, entre une position de fonctionnement abaissée, dans laquelle la bande flexible (23) s'étend sur l'intérieur de la section de passage (21), et une position de repos relevée, dans laquelle la bande flexible (23) s'étend sur l'extérieur de la section de passage (21) ; chaque bande flexible (23) ayant une hauteur, mesurée parallèle à la troisième direction (17), qui est au moins égale à la hauteur de la section de passage (21), qui est également mesurée parallèle à la troisième direction (17) ;
**caractérisée en ce que** les bandes flexibles (23) des deux dispositifs de protection (22) sont montées entre les deux volets (24) dans la première direction (4) ; et chaque volet (24) a une hauteur, mesurée parallèle à la troisième direction (17), qui est plus petite que la hauteur de la section de passage (21), qui est également mesurée parallèle à la troisième direction (17).

2. Machine selon la revendication 1, dans laquelle le volet (24) est un volet rigide.

3. Machine selon la revendication 1 ou 2, dans laquelle chaque dispositif de protection (22) comprend une pluralité de bandes flexibles (23), qui sont agencées les unes près des autres le long du côté latéral relatif (20) dans la deuxième direction (7).

4. Machine selon l'une quelconque des revendications précédentes, dans laquelle le volet (24) et les bandes flexibles (23) de chaque dispositif de protection (22) se chevauchent l'un l'autre lorsqu'ils se trouvent dans les positions de fonctionnement relatives abaissées.

5. Machine selon l'une quelconque des revendications précédentes, dans laquelle le pont roulant (9) comprend une traverse horizontale (11), qui s'étend dans la deuxième direction (7), et supporte la tête de fonctionnement (14); et un capot de protection (19), qui est sensiblement en forme de U, s'étend autour de la traverse horizontale (11), et est configuré de façon à définir les deux côtés latéraux (20) du pont roulant (9).

6. Machine selon l'une quelconque des revendications précédentes, dans laquelle l'unité de blocage (8) et le pont roulant (9) sont mobiles, l'un par rapport à l'autre, dans la première direction (4), de façon à permettre à la tête de fonctionnement (14) de traiter les composants (2).
